# EUROPÄISCHE PATENTANMELDUNG

(11) **EP 1 087 173 A1**
(43) Veröffentlichungstag der Anmeldung: **28.03.2001**
(21) Anmeldenummer: 00120371.0
(22) Anmeldetag: 16.09.2000
(51) Int. Cl.: F16N 21/00

(54) **Schmiervorrichtung**

(30) Priorität: 27.09.1999 DE 29916916 U
(71) Anmelder: perma-tec GmbH & Co. KG, 97717 Euerdorf (DE)
(72) Erfinder: Brand, Stefan, 97688 Bad Kissingen (DE)
(74) Vertreter: Albrecht, Rainer Harald, Dr.-Ing.

(57) **Zusammenfassung**

Gegenstand der Erfindung ist eine Schmiervorrichtung, insbes. zum Aufbringen von Schmierstoff auf dem Spurkranz eines Laufrades oder auf die Seitenfläche einer Laufschiene. Die Schmiervorrichtung weist erfindungsgemäß einen axial verschiebbar geführten und von einer Druckfeder (3) beaufschlagten Schmierkopf (2) auf, der unter der Wirkung der Druckfeder (3) an einer zu schmierenden Fläche anliegt, eine Abgabeöffnung (8) für Schmierstoff enthält und mit einem Schmiermittelschlauch oder einem Schmierstoffgeber verbunden ist.

## Beschreibung

Die Erfindung betrifft eine Schmiervorrichtung, insbesondere zum Aufbringen von Schmierstoff auf den Spurkranz eines Laufrades oder auf die Seitenfläche einer Laufschiene. Bei der Schmierung des Spurkranzes bzw. der Seitenfläche der Laufschiene muss häufig ein axialer Versatz kompensiert werden, der einige Millimeter bis einige Zentimeter betragen und sich ständig ändern kann.

Spurkränze und Schienen, z. B. an Laufkränen unterliegen einem hohen Verschleiß, insbesondere wenn die Laufkräne in stark verschmutzter oder verstaubter Umgebung eingesetzt werden. Zur Verschleißminderung ist eine wirksame Schmierung der Spurkränze und/oder Schienenseitenflächen erforderlich. Mit bekannten Sprühvorrichtungen zur Ölschmierung von Spurkränzen und Schienen gelingt es nicht, den Ölfilm auf die zu schmierenden Vertikalflächen zu begrenzen. Im Laufe der Zeit bildet sich auf der Lauffläche der Schienen ein störender Schmiermittelbelag, der ein Rutschen der angetriebenen Laufräder bewirken und damit den Betrieb des Laufkranes beeinträchtigen kann.

Zur Spurkranzschmierung werden in der Praxis ferner Vorrichtungen zum Aufbringen von Trockenschmierstoff eingesetzt. Diese Vorrichtungen weisen ein festes Schmierstück aus einem Kunstkohle/Graphit-Gemisch auf, das unter Federkraft an dem Spurkranz eines Laufrades anliegt. Der Abrieb des Schmierstückes bildet einen Graphitüberzug auf den Gleitflächen der Spurkränze und Laufschienen. Die abgegebene Schmierstoffmenge ist federkraftabhängig und nicht regelbar.

Der Erfindung liegt die Aufgabe zugrunde, eine Schmiervorrichtung anzugeben, die eine präzise Abgabe von öl- und fetthaltigen Schmierstoffen an den Spurkranz eines Laufrades oder die Seitenfläche einer Laufschiene ermöglicht. Dabei sollen die Laufflächen des Laufrades und der Schiene schmiermittelfrei bleiben.

Gegenstand der Erfindung und Lösung dieser Aufgabe ist eine Schmiervorrichtung mit einem axial verschiebbar geführten und von einer Druckfeder beaufschlagten Schmierkopf, der unter der Wirkung der Druckfeder an einer zu schmierenden Fläche anliegt, eine Abgabeöffnung für Schmierstoff aufweist und mit einem Schmiermittelschlauch oder einem Schmierstoffgeber verbunden ist. Die erfindungsgemäße Schmiervorrichtung kann über einen Schmiermittelschlauch an eine Zentralschmieranlage mit Dosierpumpe angeschlossen sein, welche in entsprechender Weise die Spurkränze aller Laufräder mit Schmierstoff versorgt. Ferner ist an den Schmierkopf unmittelbar oder unter Zwischenschaltung eines kurzen Verbindungsstückes ein Schmierstoffgeber anschließbar, der Schmiermittel automatisch in dosierten Mengen abgibt. Bevorzugt sind Schmierstoffgeber mit einem Schmierstoffvorratsbehälter, Stellspindel und Kolben sowie einem elektronisch gesteuerten, motorischen Antrieb, der in vorgegebenen Zeitintervallen Stellbewegungen des Kolbens auslöst. Ein Schmierstoffgeber dieser Art ist aus EP 0 845 631 A1 bekannt. Durch eine Laufradüberwachung kann die Schmierstoffabgabe auch an den Betrieb der zu schmierenden Vorrichtung gekoppelt werden.

Es ergeben sich verschiedene Möglichkeiten der weiteren konstruktiven Ausgestaltung der erfindungsgemäßen Schmiervorrichtung. Eine bevorzugte konstruktive Ausführung sieht vor, dass der Schmierkopf in einem Gehäuse axial verschiebbar und drehfest angeordnet ist und ein fest angeschlossenes Rohr aufweist, das durch eine axiale Bohrung des Gehäuses beweglich geführt ist. An das aus dem Gehäuse herausgeführte Rohrende ist ein Verbindungselement zum Anschluss eines Schmiermittelschlauches oder eines Schmierstoffgebers angeschlossen. Ferner kann am gehäuseaußenseitigen Rohrende ein die Stellung des Schmierkopfes begrenzendes Anschlagelement verstellbar angeordnet sein. Außerdem ist das Gehäuse vorzugsweise mit Mitteln zur einstellbaren Befestigung an einer Halterung ausgerüstet.

Wenn die erfindungsgemäße Schmiervorrichtung zur Schmierung des Spurkranzes eines Laufrades oder zur Schmierung der Seitenfläche einer Laufschiene verwendet wird, so ist die Längsachse des Schmierkopfes aus Platzgründen vorzugsweise unter einem spitzen Winkel zu der zu schmierenden Fläche ausgerichtet. Dabei ist der Winkel auf den im Betrieb möglichen Hub des Schmierkopfes sowie die Breite der aufzubringenden Schmierstoffspur nach den Gesetzen der Trigonometrie abzustimmen. Mit der erfindungsgemäßen Vorrichtung ist es ohne weiteres möglich, einen sich ständig ändernden axialen Versatz der zu schmierenden Teile bis zu mehreren Zentimetern zu kompensieren.

Das Abgabeende des Schmierkopfes weist vorzugsweise eine plane Anlagefläche für den Kontakt mit der zu schmierenden Fläche auf. Je nach verwendetem Schmierstoff kann es auch zweckmäßig sein, das Abgabeende mit einer keilförmigen Anlagefläche auszubilden, welche die Ausbildung eines Schmierstoffkeils hinter der Abgabeöffnung begünstigt. Das Abgabeende des Schmierkopfes kann Längsnuten und/oder Quernuten zur Verteilung des Schmierstoffes aufweisen. Zweckmäßig ist das Abgabeende des Schmierkopfes mit einer verteilernut versehen, die parallel zur Bewegungsrichtung der zu schmierenden Fläche ausgerichtet ist. Durch die Schmierstoffverteilernut kann der Schmierstoff gezielt auf die zu schmierende Fläche aufgebracht und ein Verschmutzen oder Verkrusten der Abgabeöffnung verhindert werden. Weitere Ausgestaltungen sind Gegenstand der Ansprüche 11 bis 14.

Im folgenden wird die Erfindung anhand einer lediglich ein Ausführungsbeispiel darstellenden Zeichnung erläutert. Es zeigen schematisch
- Fig. 1: einen Längsschnitt durch eine erfindungsgemäße Schmiervorrichtung zur Schmierung des Laufkranzes eines Laufrades,
- Fig. 2: die in Fig. 1 dargestellte Vorrichtung, wobei das Laufrad gegenüber der in Fig. 1 dargestellten Anordnung jedoch axial versetzt ist,
- Fig. 3: einen Ausschnitt aus Fig. 2 in vergrößerter Darstellung,
- Fig. 4: in perspektivischer Darstellung eine weitere Ausgestaltung des erfindungsgemäßen Gegenstandes.

Die in den Figuren dargestellte Schmiervorrichtung dient zur Spurkranzschmierung, insbesondere an Laufkränen. Zum grundsätzlichen Aufbau der Schmiervorrichtung gehören ein Gehäuse 1, ein Schmierkopf 2, der axial verschiebbar und drehfest im Gehäuse 1 gelagert ist, eine den Schmierkopf 2 beaufschlagende Druckfeder 3 und ein Rohr 4, das an den Schmierkopf 2 fest angeschlossen und durch eine axiale Bohrung des Gehäuses 1 beweglich geführt ist. An das aus dem Gehäuse 1 herausgeführte Rohrende ist ein Verbindungselement 5 zum Anschluss eines Schmiermittelschlauches oder eines Schmierstoffgebers angeschlossen. Der Schmierkopf 2 liegt unter der Wirkung der Druckfeder 3 an der zu schmierenden Fläche 6, hier dem Spurkranz eines Laufrades 7, an und weist eine Abgabeöffnung 8 für den durch das Rohr 4 zugeführten Schmierstoff auf. Als Schmierstoff werden Schmieröle oder Schmierfette verwendet.

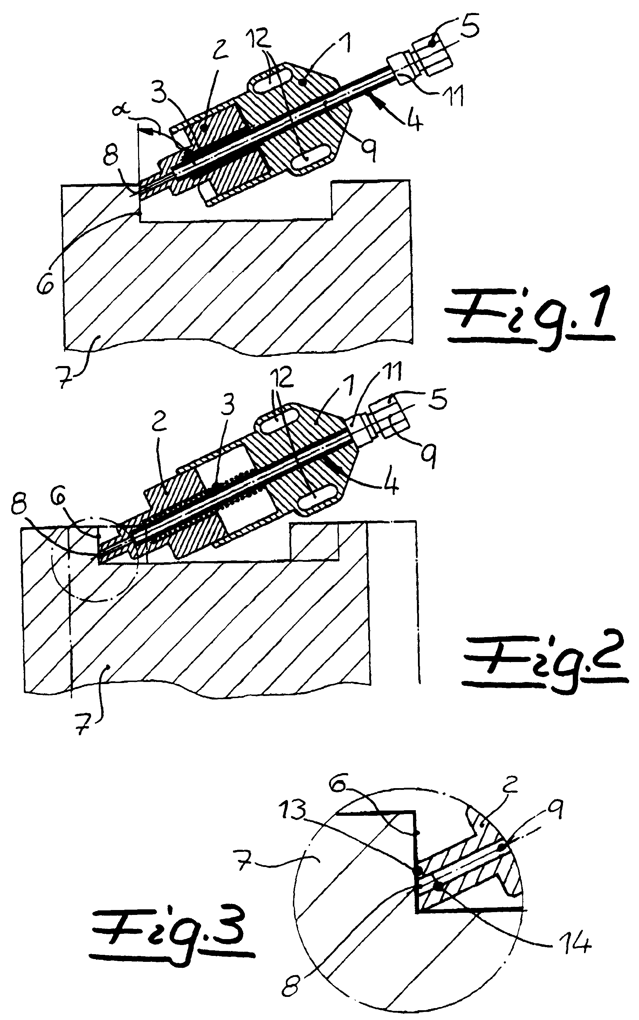

Die Längsachse 9 des Schmierkopfes ist unter einem spitzen Winkel α zu der zu schmierenden Fläche 6 ausgerichtet. Einer vergleichenden Betrachtung der Fig. 1 und 2 entnimmt man, daß der Winkel α nach den Gesetzen der Trigonometrie auf den im Betrieb möglichen Hub des Schmierkopfes 2 sowie die Breite der aufzubringenden Schmierspur abgestimmt ist. Die erfindungsgemäße Schmiervorrichtung ist in der Lage, einen sich ständig ändernden axialen Versatz bis zu einigen Zentimetern auszugleichen.

Der Aufnahmeraum des Gehäuses 1 für den Schmierkopf ist nicht zylindrisch ausgebildet, sondern weist Stege zur Drehsicherung des Schmierkopfes 2 oder eine von einer Zylinderform abweichende, z. B. rechteckförmige Innenkontur auf. Die Druckfeder 3 ist konzentrisch zur Längsachse des Schmierkopfes angeordnet. Am gehäuseaußenseitigen Rohrende kann ein den Stellhub des Schmierkopfes 2 begrenzendes Anschlagelement 11 vorgesehen sein, welches zweckmäßig zur leichteren Einstellung der Schmiervorrichtung verstellbar ausgeführt ist. Es versteht sich, dass das Anschlagelement 11 auch mit dem Verbindungselement 5 verbunden sein kann. Das Gehäuse 1 ist mit Langlöchern 12 oder ähnlichen Mitteln zur einstellbaren Befestigung an einer Halterung ausgerüstet.

In Fig. 3 ist dargestellt, dass das Abgabeende des Schmierkopfes 2 eine plane Anlagefläche 13 für den Kontakt mit der zu schmierenden Fläche 6 aufweist. Ferner ist in der Anlagefläche 13 eine Verteilernut 14 eingearbeitet, die parallel zur Bewegungsrichtung der zu schmierenden Fläche 6 ausgerichtet ist. Durch die Verteilernut 14 kann der Schmierstoff gezielt auf die zu schmierende Fläche aufgebracht und ein Verschmutzen oder Verkrusten der Abgabeöffnung 8 verhindert werden. Im Rahmen der Erfindung liegt es auch, das Abgabeende des Schmierkopfes mit Quernuten oder einer Kombination aus Längs- und Quernuten auszubilden.

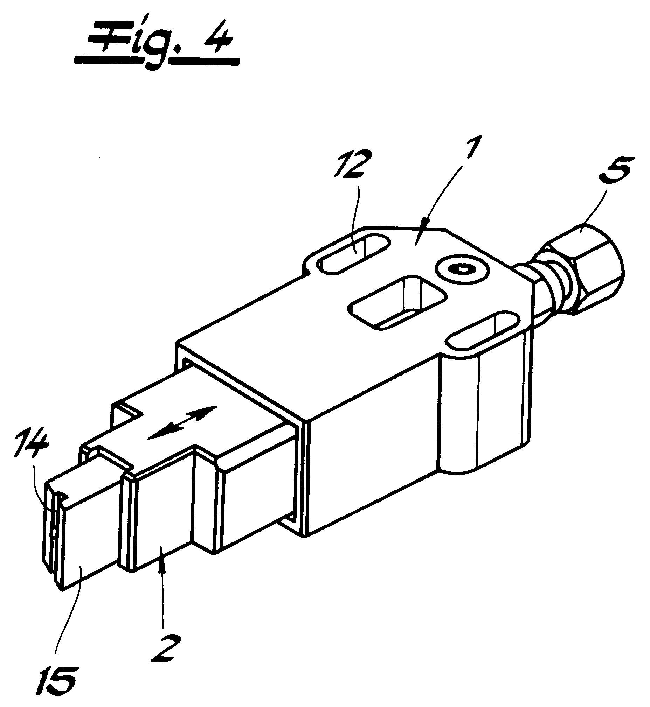

Bei der in Fig. 4 dargestellten Ausführung weist der Schmierkopf 2 ein Endstück 15 auf, das aus einem für Gleitlagerungen geeigneten Werkstoff besteht. Vorzugsweise besteht das Endstück 15 aus Kunststoff. Geeignet sind beispielsweise duroplastische Kunststoffe, auch mit Füllstoffen oder thermoplastische Kunststoffe, z. B. Polyamide. Für Sonderzwecke kann auch Kunstkohle, z. B. eine elektrographitierte Kohle, eingesetzt werden. Ferner sind Einsätze in Form einer Bürste, eines Schaumstoffkörpers oder eines filzbesetzten Gleitelementes möglich.

Bei den in den Figuren dargestellten und in den Ausführungsbeispielen beschriebenen Ausführungen ist der Schmierkopf 2 an einer Druckfeder 3 abgestützt, die als separates Teil ausgebildet ist. Im Rahmen der Erfindung liegt es auch, den Schmierkopf 2 oder das Gehäuse 1 als Spritzgussteil auszubilden, an das Federelemente für die federnde Abstützung des Schmierkopfes angeformt sind.

Die erfindungsgemäße Schmiervorrichtung erlaubt eine genau zu lokalisierende und dosierte Abgabe von öl- oder fetthaltigem Schmierstoff. Durch die federnde Anordnung des Schmierkopfes ist es möglich, einen axialen Versatz des zu schmierenden Teils zu kompensieren. Die erfindungsgemäße Vorrichtung eignet sich in besonderer Weise zur Spurkranzschmierung von Laufrädern und ist auch für den rauhen Betrieb an Laufkrananlagen geeignet. Durch eine geeignete Halterung können zwei Schmiervorrichtungen beispielsweise auch so miteinander verbunden werden, dass jede Schmiervorrichtung eine Radfläche desselben Rades schmiert.

## Patentansprüche

1. Schmiervorrichtung, insbesondere zum Aufbringen von Schmierstoff auf dem Spurkranz eines Laufrades oder auf die Seitenfläche einer Laufschiene, **gekennzeichnet durch** einen axial verschiebbar geführten und von einer Druckfeder (3) beaufschlagten Schmierkopf (2), der unter der Wirkung der Druckfeder (3) an einer zu schmierenden Fläche (6) anliegt, eine Abgabeöffnung (8) für Schmierstoff aufweist und mit einem Schmiermittelschlauch oder einem Schmierstoffgeber verbunden ist.

2. Schmiervorrichtung nach Anspruch 1, dadurch gekennzeichnet, dass der Schmierkopf (2) in einem Gehäuse (1) axial verschiebbar und drehfest angeordnet ist und ein fest angeschlossenes Rohr (4) aufweist, das durch eine axiale Bohrung des Gehäuses (1) beweglich geführt ist.

3. Schmiervorrichtung nach Anspruch 2, dadurch gekennzeichnet, dass an das Rohr (4) ein Verbindungselement (5) zum Anschluss eines Schmiermittelschlauches oder eines Schmierstoffgebers angeschlossen ist.

4. Schmiervorrichtung nach Anspruch 2 oder 3, dadurch gekennzeichnet, dass am gehäuseaußenseitigen Rohrende ein den Stellhub des Schmierkopfes (2) begrenzendes Anschlagelement (11) verstellbar angeordnet ist.

5. Schmiervorrichtung nach einem der Ansprüche 2 bis 4, dadurch gekennzeichnet, dass das Gehäuse (1) Mittel (12) zur einstellbaren Befestigung an einer Halterung aufweist.

6. Schmiervorrichtung nach einem der Ansprüche 1 bis 5, dadurch gekennzeichnet, dass die Längsachse (9) des Schmierkopfes unter einem spitzen Winkel (α) zu der zu schmierenden Fläche (6) ausgerichtet ist.

7. Schmiervorrichtung nach einem Anspruch 1 bis 6, dadurch gekennzeichnet, dass das Abgabeende des Schmierkopfes (2) eine plane Anlagefläche (13) für den Kontakt mit der zu schmierenden Fläche (6) aufweist.

8. Schmiervorrichtung nach einem der Ansprüche 1 bis 6, dadurch gekennzeichnet, dass das Abgabeende des Schmierkopfes (2) eine keilförmige Anlagefläche aufweist, welche die Ausbildung eines Schmierstoffkeils hinter der Abgabeöffnung (8) begünstigt.

9. Schmiervorrichtung nach einem der Ansprüche 1 bis 8, dadurch gekennzeichnet, dass das Abgabeende des Schmierkopfes (2) Längsnuten und/oder Quernuten zur Verteilung der Schmierstoffes aufweist.

10. Schmiervorrichtung nach Anspruch 9, dadurch gekennzeichnet, dass das Abgabeende des Schmierkopfes (2) eine Verteilernut (14) aufweist, die parallel zur Bewegungsrichtung der zu schmierenden Flächen (6) ausgerichtet ist.

11. Schmiervorrichtung nach einem der Ansprüche 1 bis 10, dadurch gekennzeichnet, dass die Druckfeder (3) konzentrisch zur Längsachse des Schmierkopfes (2) angeordnet ist.

12. Schmiervorrichtung nach einem der Ansprüche 1 bis 11, dadurch gekennzeichnet, dass der Schmierkopf (2) ein Endstück (15) aufweist, das aus einem für Gleitlagerungen geeigneten Werkstoff besteht.

13. Schmiervorrichtung nach Anspruch 12, dadurch gekennzeichnet, dass das Endstück (15) aus Kunststoff oder Kunstkohle besteht.

14. Schmiervorrichtung nach einem der Ansprüche 1 bis 11, dadurch gekennzeichnet, dass der Schmierkopf (2) an seinem abgabeseitigen Ende ein Schmierstoffauftragselement in Form einer Bürste, eines Schaumstoffkörpers oder eines Gleitelementes aus Filz aufweist.
